# EUROPEAN PATENT APPLICATION

(11) **EP 4 611 132 A1**
(43) Date of publication of application: **03.09.2025**
(21) Application number: 23901169.5
(22) Date of filing: 08.12.2023
(51) Int. Cl.: H01M 50/105, H01M 50/178, H01M 50/121, H01M 50/119, H01M 50/145, H01M 50/198, H01M 50/184

(54) **POUCH CELL**

(30) Priority: 09.12.2022 KR 20220171497; 04.04.2023 KR 20230044304; 05.12.2023 KR 20230174817
(71) Applicant: LG Energy Solution, Ltd., Seoul 07335 (KR)
(72) Inventor: KIM, Sang Hun, Daejeon 34122 (KR); CHOI, Ji Eun, Daejeon 34122 (KR); YU, Hyung Kyun, Daejeon 34122 (KR); LEE, Jae Ho, Daejeon 34122 (KR); PARK, Eun Suk, Daejeon 34122 (KR)
(74) Representative: Plasseraud IP
(86) International application number: PCT/KR2023/020258
(87) International publication number: WO 2024/123152

(57) **Abstract**

The present invention relates to a pouch cell capable of improving the sealing durability of a bonding portion to delay or prevent pouch venting caused by internal gases generated during the process of charging or discharging the pouch cell.

The pouch cell according to the present invention includes an electrode assembly, an inner pouch film covering a portion of the electrode assembly, and an outer pouch film surrounding an outer circumference of the inner pouch film and coupled to the inner pouch film so as to cover an outer surface of the electrode assembly along with the inner pouch film.

## Description

### TECHNICAL FIELD

### CROSS-REFERENCE TO RELATED APPLICATIONS

The present application claims the benefit of the priority of Korean Patent Application No. 10-2022-0171497, filed on December 9, 2022, Korean Patent Application No. 10-2023-0044304, filed on April 4, 2023, and Korean Patent Application No. 10-2023-0174817, filed on December 5, 2023, which are hereby incorporated by reference in their entirety.

### TECHNICAL FIELD

The present invention relates to a pouch cell, and more particularly, to a secondary battery pouch cell capable of charging and discharging.

### BACKGROUND ART

Lately, rising prices of energy sources due to fossil fuel depletion and ever-growing awareness of environmental pollution have driven the demand for eco-friendly alternative energy sources to be placed as a first priority for life in the future. Accordingly, research on technologies for generating various powers such as photovoltaic, wind, and tidal powers is continuing, and power storage devices such as batteries for more efficiently using the generated electric energy are also drawing much attention.

On top of that, there has been a dramatic increase in demand for batteries as energy sources with the technical development and increase in demand for electronic mobile devices and electric vehicles using batteries, and research on batteries capable of meeting various requirements has been conducted accordingly.

Batteries for storing energy are generally classified into a primary battery and a secondary battery. The primary battery is a disposable consumable battery, but on the other hand, the secondary battery is a rechargeable battery which is manufactured by using a material in which oxidation and reduction processes between current and a substance are repeatable. That is, when a reduction reaction is performed on a material by the current, power is charged, and when an oxidation reaction is performed on a material, power is discharged. As such, the charging-discharging is repeatedly performed to generate electricity.

The secondary batteries may be classified according to the shape thereof into cylindrical cells, pouch cells, and square cells. In particular, the pouch cells may be manufactured in a form in which an electrode assembly in which a positive electrode, a negative electrode, a separator, and the like are staked is accommodated inside a pouch, and an outer portion of the pouch is sealed.

Meanwhile, an electrolyte along with the electrode assembly may be accommodated inside the pouch of the pouch cell. In this case, residual moisture in the electrolyte inside the pouch of the pouch cell or moisture infiltrated from the outside may react with lithium salt to generate hydrogen fluoride (HF), and decomposition of the electrolyte may cause gases such as carbon dioxide, carbon monoxide, ethylene, and methane. In addition, depending on the materials of the positive electrode included in the electrode assembly of the pouch cell, additional hydrogen and HF may be generated, which may lead to overheating resulting from overcharge and internal short circuit during the process of charging and discharging. Accordingly, a large amount of gas may be generated inside the pouch. With such gas, the pressure inside the pouch increases, and the increased pressure may cause swelling in which the pouch swells or venting in which a portion of the pouch bursts.

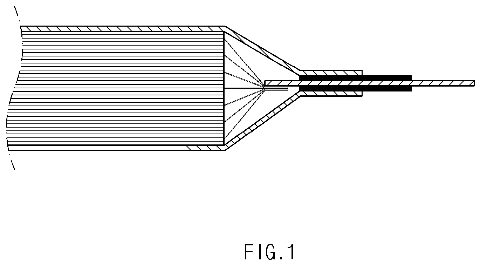

FIG. 1 is a cross-sectional view schematically showing a cross-section of a typical pouch cell.

Referring to FIG. 1, a typical pouch cell may be formed such that a pair of pouch films are formed to be combined by facing each other. Specifically, an electrode assembly including a positive electrode, a negative electrode, and a separator is disposed on a cup portion of a pair of pouch films facing each other, and an electrode lead electrically connected to the electrode assembly may be shaped to protrude to the outside of the pouch film.

In addition, in the typical pouch cell, the pair of pouch films each has a sealant layer on one side facing each other. Accordingly, the pair of pouch films may be bonded as the sealant layers facing each other melt by heat.

In the typical pouch cell, stress caused by gas generated inside the pouch is concentrated on a sealing portion of temporary attachment. In this case, the portion of temporary attachment may refer to a portion formed from an inner end to a specific inner point of a portion to be sealed. Specifically, the portion of temporary attachment may refer to a portion in which the pouch is relatively weakly bonded through an adhesive material compared to the sealed portion. Accordingly, in the typical pouch cell, stress may be concentrated in the portion of temporary attachment where adhesive sealing properties are relatively weak. That is, the typical pouch cell had an issue in that the seal of the sealed portion was easily damaged due to pressure from the gas inside. In addition, due to this damage, the typical pouch cell had a high risk of causing venting.

Therefore, there is a need for a new type of pouch cell capable of improving sealing durability to delay or prevent the venting from being caused.

### DISCLOSURE OF THE INVENTION

### TECHNICAL PROBLEM

An aspect of the present invention provides a pouch cell capable of improving the sealing durability of a bonding portion to delay or prevent pouch venting caused by internal gases generated during the process of charging or discharging the pouch cell.

### TECHNICAL SOLUTION

According to an aspect of the present invention, provided is a pouch cell according to the present invention including an electrode assembly, an inner pouch film covering a portion of the electrode assembly, and an outer pouch film surrounding an outer circumference of the inner pouch film and coupled to the inner pouch film so as to cover an outer surface of the electrode assembly along with the inner pouch film.

The inner pouch film may include a (1-1)-th layer, and a (1-2)-th layer disposed on an opposite side of the electrode assembly with respect to the (1-1)-th layer, and the outer pouch film may include a (2-1)-th layer facing the electrode assembly and bonded to the (1-2)-th layer such that the inner pouch film and the outer pouch film are coupled.

The inner pouch film may include an inner body portion, and an inner circumference portion connected to the inner body portion at a predetermined angle and extending toward the outer pouch film, and the outer pouch film may include an outer body portion, and an outer circumference portion connected to the outer body portion at a predetermined angle and extending toward the inner pouch film, and an outer circumference of the inner circumference portion and an inner circumference of the outer circumference portion may be in contact and coupled.

The pouch cell may further include an electrode lead electrically connecting the electrode assembly to the outside, wherein a first through hole may be formed in the inner circumference portion, a second through hole may be formed in the outer circumference portion, at a position corresponding to the position of the first through hole, and the electrode lead may be electrically connected to the outside through the first through hole and the second through hole.

The inner circumference portion may extend such that one end contacts the outer body portion.

The outer circumference portion may extend by a length equal to the length that the inner circumference portion extends.

The outer pouch film may include an outer body portion, an outer circumference portion connected to the outer body portion at a predetermined angle and extending toward the inner pouch film, and a bonding portion connected to the outer circumference portion at a predetermined angle and extending in a direction away from the outer circumference portion, and an outer circumference of the inner pouch film and an inner circumference of the bonding portion may be in contact and coupled.

The inner pouch film may include an inner body portion, and an inner circumference portion connected to the inner body portion at a predetermined angle and extending toward the outer pouch film, an outer circumference of the inner body portion and an inner circumference of the bonding portion may be in contact and coupled, and an outer circumference of the inner circumference portion and an inner circumference of the outer circumference portion may be in contact and coupled.

At least one of the (1-2)-th layer and the (2-1)-th layer may include a polyolefin-based resin.

The polyolefin-based resin may be polypropylene (PP) or polyethylene (PE).

The outer pouch film may include a (2-2)-th layer disposed on an opposite side of the electrode assembly with respect to the (2-1)-th layer, and at least one of the (1-1)-th layer and the (2-2)-th layer may include aluminum (Al) or stainless steel (SUS).

The outer pouch film may include an insulating material, and may further include an insulating layer disposed on an opposite side of the electrode assembly with respect to the (2-2)-th layer.

The inner pouch film may include a corrosion-resistant material, and may further include a corrosion resistance layer disposed between the (1-1)-th layer and the electrode assembly.

The (1-1)-th layer may include metal, and the (1-2)-th layer may include a polyolefin-based resin.

The inner pouch film and the outer pouch film may have a box shape with one side open, and an outer surface of the circumference portion formed along an edge of one side of the inner pouch film may be coupled to an inner surface of the circumference portion formed along an edge of one side of the outer pouch film.

### ADVANTAGEOUS EFFECTS

A pouch cell according to the present invention may include an electrode assembly, an inner pouch film covering the electrode assembly, and an outer pouch film surrounding an outer circumference of the inner pouch film and coupled to the inner pouch film.

Accordingly, pouch venting caused by internal gases generated during the process of charging or discharging the pouch cell may be delayed or prevented.

In addition, stress caused by the gases generated inside the pouch is distributed, thereby delaying or preventing the pouch venting.

In addition, the sealing durability of a bonding portion may be improved, and accordingly, the pouch cell may have improved safety.

In addition, the stress caused by the gases generated inside the pouch acts in a planar direction of a bonding portion, which may have the effect of improving bonding properties.

The effects according to the present invention are not limited to the features exemplified above, and more various effects are included in the present specification.

### BRIEF DESCRIPTION OF THE DRAWINGS

FIG. 1 is a cross-sectional view schematically showing a cross-section of a typical pouch cell;
FIG. 2 is a perspective view schematically showing a pouch cell according to an embodiment of the present invention;
FIG. 3 is a perspective view schematically showing an inner pouch film and an outer pouch film according to an embodiment of the present invention;
FIG. 4 is a cross-sectional view schematically showing a portion of a pouch cell according to an embodiment of the present invention, cut along A-A' of FIG. 2;
FIG. 5 is a cross-sectional view schematically showing a portion of a pouch cell according to another embodiment of the present invention, cut along A-A' of FIG. 2;
FIG. 6 is a cross-sectional view schematically showing a portion of a pouch cell according to yet another embodiment of the present invention, cut along A-A' of FIG. 2; and
FIG. 7 is a cross-sectional view schematically showing a portion of a pouch cell according to yet another embodiment of the present invention, cut along A-A' of FIG. 2.

### MODE FOR CARRYING OUT THE INVENTION

Hereinafter, preferred embodiments of the present invention will be described in detail with reference to the accompanying drawings so as to be easily carried out by a person skilled in the art to which the present invention pertains. The present invention may, however, be embodied in many different forms, and is not limited to Examples set forth herein.

In order to clearly describe the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

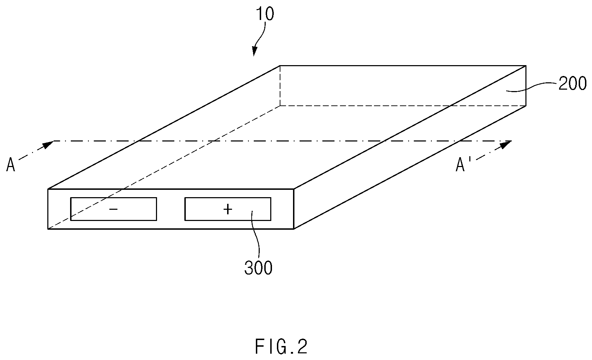

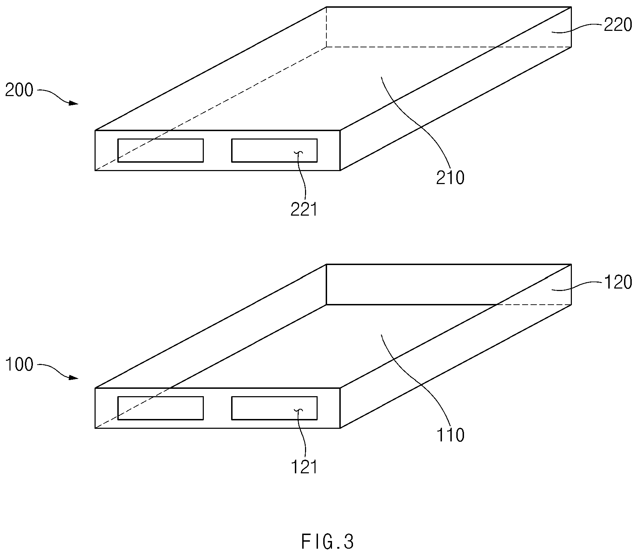

FIG. 2 is a perspective view schematically showing a pouch cell 10 according to an embodiment of the present invention, and FIG. 3 is a perspective view schematically showing an inner pouch film 100 and an outer pouch film 200 according to an embodiment of the present invention.

The pouch cell 10 according to an embodiment of the present invention may include an electrode assembly, an inner pouch film 100, and an outer pouch film 200. In this case, the pouch cell 10 described in the present invention may refer to a secondary battery capable of charging and discharging. Specifically, the pouch cell 10 may refer to a secondary battery in which an electrode assembly including a negative electrode, a positive electrode, and a separator is disposed inside a pouch, and the pouch surrounds the electrode assembly. A typical pouch cell may include a pouch formed by molding a cup portion that may accommodate an electrode assembly into a pouch film. In contrast, the pouch cell 10 according to an embodiment of the present invention may include a pouch that is different in form from the typical one.

The inner pouch film 100 of the pouch cell 10 according to an embodiment of the present invention may cover a portion of the electrode assembly. Specifically, the inner pouch film 100 and the outer pouch film 200 may cover an outer surface of the electrode assembly. That is, the outer pouch film 200 may cover a portion of the outer surface of the electrode assembly, which is not covered by the inner pouch film 100. Hereinafter, the form in which the inner pouch film 100 and the outer pouch film 200 are combined is defined as a pouch.

Referring to FIGS. 2 and 3, the inner pouch film 100 and the outer pouch film 200 covering the electrode assembly may be disposed to be combined. Regarding the form in which the inner pouch film 100 and the outer pouch film 200 are combined, the outer pouch film 200 of the pouch cell 10 according to an embodiment of the present invention may surround an outer circumference of the inner pouch film 100 and be combined with the inner pouch film 100. That is, the typical pouch films are combined with surfaces facing each other in contact, whereas the inner pouch film 100 and the outer pouch film 200 according to an embodiment of the present invention may be combined with an outer surface of the inner pouch film 100 and an inner surface of the outer pouch film 200 in contact.

Hereinafter, the shapes of the inner pouch film 100 and the outer pouch film 200 according to an embodiment of the present invention will be described in more detail.

Referring to FIG. 3, the inner pouch film 100 and the outer pouch film 200 may have a box shape. In this case, the box shape may indicate a substantially rectangular shape. Specifically, the inner pouch film 100 and the outer pouch film 200 may have a box shape with one side open. Based on FIG. 3, the open side of the inner pouch film 100 may be an upper side, and the open side of the outer pouch film 200 may be a lower side.

A portion of the inner pouch film 100 may enter the inside of the outer pouch film 200 through the open side of the outer pouch film 200. In this case, an outer surface of the circumference portion formed along an edge of one side of the inner pouch film 100 may be combined with an inner surface of the circumference portion formed along an edge of one side of the outer pouch film 200. That is, the inner pouch film 100 and the outer pouch film 200 may be combined in a form where two boxes with one side open are fitted into each other (see FIG. 2). When the inner pouch film 100 and the outer pouch film 200 have a rectangular shape, the circumference portion may represent four sides.

The electrode assembly may be accommodated in a space formed inside through the combining of the inner pouch film 100 and the outer pouch film 200.

Hereinafter, the combined form of the inner pouch film 100 and the outer pouch film 200 according to an embodiment of the present invention will be described in more detail.

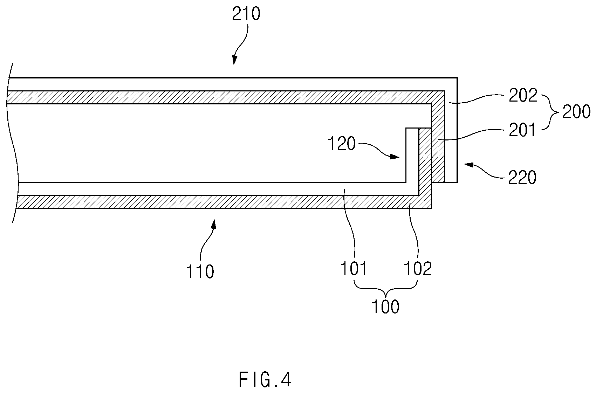

FIG. 4 is a cross-sectional view schematically showing a portion of a pouch cell 10 according to an embodiment of the present invention, cut along line A-A' of FIG. 2.

Referring to FIG. 4, the inner pouch film 100 of the pouch cell 10 may include a (1-1)-th layer 101 and a (1-2)-th layer 102. In this case, the (1-2)-th layer 102 may be disposed on an opposite side of the electrode assembly with respect to the (1-1)-th layer 101. That is, the (1-1)-th layer 101 may be disposed closer to the electrode assembly than the (1-2)-th layer 102.

The outer pouch film 200 of the pouch cell 10 may include a (2-1)-th layer 201. The (2-1)-th layer 201 of the outer pouch film 200 may oppose the electrode assembly. In this case, the (2-1)-th layer 201 of the outer pouch film 200 may be bonded to the (1-2)-th layer 102 of the inner pouch film 100 such that the inner pouch film 100 and the outer pouch film 200 are combined. Specifically, a portion of the (2-1)-th layer 201 of the outer pouch film 200 may be bonded to a portion of the (1-2)-th layer 102 of the inner pouch film 100.

In the pouch cell 10 according to an embodiment of the present invention, the (1-2)-th layer 102 including the outer surface of the inner pouch film 100 and the (2-1)-th layer 201 including the inner surface of the outer pouch film 200 may be in contact and combined. Accordingly, stress caused by gas generated inside the pouch cell 10 may act in a planar direction of the inner pouch film 100 or the outer pouch film 200. That is, the pouch cell 10 according to an embodiment of the present invention, in which stress acts in a different form from that of the typical pouch cells, may have improved resistance to pressure inside the pouch cell. In addition, the pouch cell 10 according to an embodiment of the present invention may be manufactured in a substantially rectangular shape.

Meanwhile, the method by which a portion of the (1-2)-th layer 102 and a portion of the (2-1)-th layer 201 are bonded may vary. For example, a portion of the (1-2)-th layer 102 and a portion of the (2-1)-th layer 201 may be bonded through sealing that applies heat and pressure.

As an example of a component that may be bonded by heat and pressure, the (1-2)-th layer 102 and the (2-1)-th layer 201 may include a polyolefin-based resin. For a more specific example, the (1-2)-th layer 102 and the (2-1)-th layer 201 may include at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylenebenzobisoxazole, polyarylate, Teflon, and glass fiber. Mainly, polyolefin-based resins such as polypropylene (PP) or polyethylene (PE) may be used. In particular, polypropylene may be excellent in mechanical properties such as tensile strength, rigidity, surface hardness, wear resistance, heat resistance, and chemical properties such as corrosion resistance.

As an example of a material having sealing properties by heat, the (1-2)-th layer 102 and the (2-1)-th layer 201 containing a polyolefin-based resin may be bonded as the polyolefin-based resin melts due to heat.

The inner pouch film 100 and the outer pouch film 200 according to an embodiment of the present invention may include layers other than the layer containing a polyolefin-based resin. For example, the inner pouch film 100 and the outer pouch film 200 may include a layer containing metal.

In relation to this, the outer pouch film 200 may include a (2-2)-th layer 202 disposed on an opposite side of the electrode assembly with respect to the (2-1)-th layer 201. That is, the outer pouch film 200 may include the (2-1)-th layer 201 positioned closer to the electrode assembly disposed inside, and the (2-2)-th layer 202 positioned further away from the electrode assembly than the (2-1)-th layer 201.

In this case, at least one of the (1-1)-th layer 101 of the inner pouch film 100 and the (2-2)-th layer 202 of the outer pouch film 200 may include aluminum (Al) or stainless steel (SUS). Specifically, the (1-1)-th layer 101 and the (2-2)-th layer 202 may include aluminum (Al) or stainless steel (SUS). Preferably, to obtain the rigidity of the inner pouch film 100 and the outer pouch film 200, the (1-1)-th layer 101 and the (2-2)-th layer 202 may include stainless steel (SUS).

Meanwhile, another example of the (1-1)-th layer 101 and the (2-2)-th layer 202 may further include at least one material selected from the group consisting of iron (Fe), carbon (C), chromium (Cr), manganese (Mn), and nickel (Ni). The (1-1)-th layer 101 of the inner pouch film 100 and the (2-2)-th layer 202 of the outer pouch film 200 contain metal, and thus the pouch cell 10 may obtain rigidity.

Referring to FIG. **4****,** the inner pouch film 100 according to an embodiment of the present invention may include an inner body portion 110 and an inner circumference portion 120. In this case, the inner circumference portion 120 may be connected to the inner body portion 110 at a predetermined angle. In addition, the inner circumference portion 120 may extend toward the outer pouch film 200. Preferably, the angle formed between the inner body portion 110 and the inner circumference portion 120 may be about 90°.

The outer pouch film 200 may include an outer body portion 210 and an outer circumference portion 220. In this case, the outer circumference portion 220 may be connected to the outer body portion 210 at a predetermined angle. In addition, the outer circumference portion 220 may extend toward the inner pouch film 100. Preferably, the angle formed between the outer body portion 210 and the outer circumference portion 220 may be about 90°.

The inner body portion 110 of the inner pouch film 100 and the outer body portion 210 of the outer pouch film 200 may have a plate shape with a substantially rectangular cross-section, and may cover an upper portion and a lower portion of the electrode assembly. In addition, the inner circumference portion 120 and the outer circumference portion 220 may be connected to the four corners of the inner body portion 110 and the outer body portion 120, which have a substantially rectangular cross-section, and may cover a side surface of the electrode assembly.

Referring to FIG. 4, the outer circumference of the inner circumference portion 120 and the inner circumference of the outer circumference portion 220 may be in contact and combined. Specifically, the (1-2)-th layer 102 of the inner circumference portion 120 and the (2-1)-th layer 201 of the outer circumference portion 220 may be in contact and combined. In this case, the (1-2)-th layer 102 is a portion of the inner pouch film 100 formed of a plurality of layers divided into layers and the inner circumference portion 120 is a portion of the inner pouch film 100 divided by the formed position, and accordingly, the inner circumference portion 120 may also include the f(1-2)-th layer 102. Likewise, the outer circumference portion 220 may also include the (2-1)-th layer 201.

Meanwhile, the electrode assembly covered by the inner pouch film 100 and the outer pouch film 200 and accommodated therebetween may generate electrical energy. As an example of a component for transmitting electrical energy generated by the electrode assembly to the outside, the pouch cell 10 may include an electrode lead 300 electrically connected to the electrode assembly (see FIG. 2).

The electrode lead 300 may be a conductor and may be variously shaped. For example, the electrode lead 300 may have a shape that protrudes to the outside of the pouch, and may have an outer surface disposed on the same plane as the outer surface of the pouch. In addition, the outer surface of the electrode lead 300 may be disposed further inside than the outer surface of the pouch.

As an example of a component in which the electrode lead 300 may be disposed, a first through hole 121 may be formed in the inner circumference portion 120 according to an embodiment of the present invention. In addition, a second through hole 221 may be formed in the outer circumference portion 220. In this case, the second through hole 221 of the outer circumference portion 220 may be formed at a position corresponding to the position where the first through hole 121 of the inner circumference portion 120 is formed (see FIGS. 1 and 2).

The shapes of the first through hole 121 and the second through hole 221 may vary depending on the shape of the electrode lead 300. For example, the pouch cell 10 may include an electrode lead 300 having a substantially rectangular shape, and the first through hole 121 and the second through hole 221 may be formed to have a substantially rectangular cross-section.

When the electrode lead 300 has a shape that protrudes to the outside of the pouch or has an outer surface disposed on the same plane as the outer surface of the pouch, the electrode lead 300 may pass through the first through hole 121 and the second through hole 221.

The electrode lead 300 may be electrically connected to the outside through the first through hole 121 and the second through hole 221.

When using the pouch cell 10, charging and discharging may be repeated, which may cause gas to be generated inside the pouch. Pressure caused by gas inside the pouch according to an embodiment of the present invention may act toward each inner surface of the inner pouch film 100. In this case, the pressure inside the pouch may also act toward side surfaces formed along the four corners of an open side of the inner pouch film 100. That is, the pressure caused by gas inside the pouch may act to strengthen the adhesive force between the inner pouch film 100 and the outer pouch film 200. In addition, the pressure caused by gas inside the pouch may act in a planar direction with respect to a bonding portion of the inner pouch film 100 and the outer pouch film 200. Accordingly, the pouch cell 10 including a new type of pouch may have improved sealing durability so that venting is prevented even under relatively high pressure.

Hereinafter, descriptions of the same components as those of the pouch cell 10 according to an embodiment of the present invention will not be given, and different components will be mainly described.

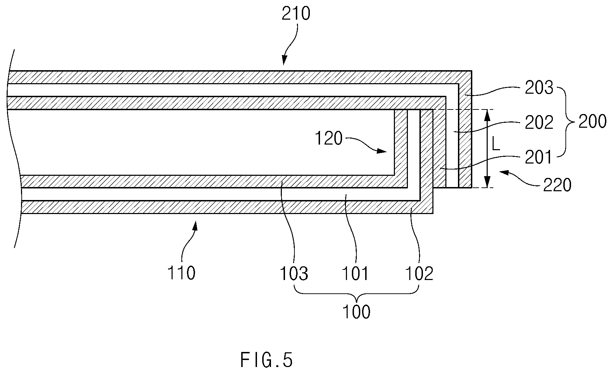

FIG. 5 is a cross-sectional view schematically showing a portion of a pouch cell 10 according to another embodiment of the present invention, cut along line A-A' of FIG. 2.

In the pouch cell 10 according to another embodiment of the present invention, the shape of the inner circumference portion 120 of the inner pouch film 100 of may be different from that of an embodiment. In addition, the inner pouch film 100 and the outer pouch film 200 may include another layer.

Referring to FIG. 5, one end of the inner circumference portion 120 of the inner pouch film 100 according to another embodiment of the present invention may be in contact with the outer pouch film 200. Specifically, one end of the inner circumference portion 120 of the inner pouch film 100 may extend to be in contact with the outer body portion 210 of the outer pouch film 200.

When one end of the inner circumference portion 120 extends to be in contact with the outer body portion 210, most of the pressure caused by gas inside the pouch may act in the planar direction on the inner circumference portion 120. Accordingly, the pressure may act in a direction that improves the sealing durability of the inner circumference portion 120 and the outer circumference portion 210.

Meanwhile, the outer circumference portion 220 of the outer pouch film 200 may also extend. Preferably, the outer circumference portion 220 of the outer pouch film 200 may extend by a length (L) similar to the length that the inner circumference portion 120 of the inner pouch film 100 extends. Referring to FIG. 5, the length L that the outer circumference portion 220 extends may be approximately equal to the length that the inner circumference portion 120 extends. Accordingly, an area where the inner circumference portion 120 and the outer circumference portion 220 are combined may become greater, thereby improving the bonding strength between the inner pouch film 100 and the outer pouch film 200.

The inner pouch film 100 of the pouch cell 10 according to another embodiment of the present invention may further include other layers in addition to the (1-1)-th layer 101 and the (1-2)-th layer 102. Specifically, the inner pouch film 100 may further include a corrosion resistance layer 103.

The corrosion resistance layer 103 of the inner pouch film 100 may include a corrosion-resistant material. In this case, the corrosion-resistant material may refer to a material that has resistance to corrosion so as not to be corroded by an electrolyte solution disposed inside the pouch.

Referring to FIG. 5, the corrosion resistance layer 103 of the inner pouch film 100 may be disposed between the (1-1)-th layer 101 and the electrode assembly. That is, in the inner pouch film 100 according to another embodiment of the present invention, the corrosion resistance layer 103 may be layer disposed on an innermost surface, and the corrosion resistance layer 103 may be disposed to oppose the electrode assembly. Accordingly, the inner pouch film 100 may be formed in the order of the corrosion resistance layer 103, the (1-1)-th layer 101, and the (1-2)-th layer 102 from the inside.

The inner pouch film 100 of the pouch cell 10 according to another embodiment of the present invention further includes the corrosion resistance layer 103, and accordingly, corrosion of the (1-1)-th layer 101 containing metal may be prevented.

The outer pouch film 200 of the pouch cell 10 according to another embodiment of the present invention may further include other layers in addition to the (2-1)-th layer 201 and the (2-2)-th layer 202. Specifically, the outer pouch film 200 may further include an insulating layer 203.

The insulating layer 203 of the outer pouch film 200 may include an insulating material. In this case, the insulating material may refer to a material that does not conduct electricity or heat.

For example, the insulating layer 203 may include at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Mainly, polymers such as nylon resin or polyethylene terephthalate (PET), which have wear resistance and heat resistance, may be used.

Referring to FIG. 5, the insulating layer 203 of the outer pouch film 200 may be disposed on an opposite side of the electrode assembly with respect to the (2-2)-th layer 202. That is, the outer pouch film 200 according to another embodiment of the present invention may have the insulating layer 203 disposed on an outermost surface. Accordingly, the outer pouch film 200 may be formed in the order of the (2-1)-th layer 201, the (2-2)-th layer 202, and the insulating layer 203 from the inside.

The outer pouch film 200 of the pouch cell 10 according to another embodiment of the present invention further includes the insulating layer 203, and accordingly, the (2-2)-th layer 202 containing metal may be insulated from other components. Accordingly, the insulating layer 203 may prevent unnecessary short circuits from being caused in the outer pouch film 200.

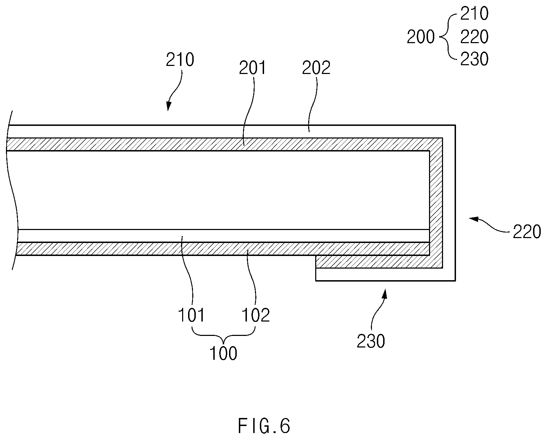

FIG. 6 is a cross-sectional view schematically showing a portion of a pouch cell 10 according to yet another embodiment of the present invention, cut along line A-A' of FIG. 2.

Referring to FIG. 6, the outer pouch film 200 of the pouch cell 10 according to another embodiment of the present invention may further include a bonding portion 230.

The bonding portion 230 of the outer pouch film 200 may be connected to the outer circumference portion 220 at a predetermined angle and may extend in a direction away from the outer circumference portion 220. Specifically, the bonding portion 230 may extend toward the center of the pouch. In this case, the angle formed between the outer circumference portion 220 and the bonding portion 230 may be about 90°.

The bonding portion 230 extending in a direction away from the outer circumference portion 220 may be bonded to the inner pouch film 100. In relation to this, the inner pouch film 100 according to another embodiment of the present invention may have a substantially plate shape. In this case, the bonding portion 230 may be combined to a lower surface of the inner pouch film 100 with reference to FIG. 6.

The bonding portion 230 is combined to the lower surface of the inner pouch film 100, and accordingly, the outer pouch film 200 may be bonded to the inner pouch film 100 over a larger area, thereby improving the sealing durability of the pouch cell 10.

Hereinafter, description of the same components as those of the pouch cell 10 according to an embodiment and another embodiment of the present invention will not be given, and different components will be mainly described.

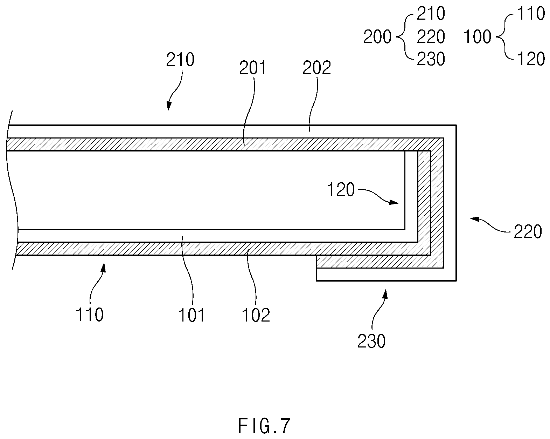

FIG. 7 is a cross-sectional view schematically showing a portion of a pouch cell 10 according to yet another embodiment of the present invention, cut along line A-A' of FIG. 2.

Referring to FIG. 7, when the outer pouch film 200 includes the bonding portion 230, the inner pouch film 100 may include the inner body portion 110 and the inner circumference portion 120.

Specifically, in the inner pouch film 100 and the outer pouch film 200, the outer circumference of the inner body portion 110 and the inner circumference of the bonding portion 230 may be in contact and combined, and the outer circumference of the inner circumference portion 120 and the inner circumference of the outer circumference portion 220 may be in contact and combined. In this case, the inner circumference portion 120 of the inner pouch film 100 may extend to be in contact with the outer body portion 210 of the outer pouch film 200.

Referring to FIG. 7, the pouch cell 10 according to yet another embodiment of the present invention may be bonded in two portions. Accordingly, the sealing property between the inner pouch film 100 and the outer pouch film 200 may be further improved. In this case, both portions bonded together may receive pressure from the inside of the pouch in the planar direction.

Although the present invention is described by specific embodiments and drawings, the present invention is not limited thereto, and various changes and modifications may be made by a person skilled in the art to which the present invention pertains within the technical idea of the present invention and equivalent scope of the appended claims.

### [DESCRIPTION OF SYMBOLS]

- 10:: Pouch cell
- 100:: Inner pouch film
- 101:: (1-1)-th layer
- 102:: (1-2)-th layer
- 103:: Corrosion resistance layer
- 110:: Inner body portion
- 120:: Inner circumference portion
- 121:: First through hole
- 200:: Outer pouch film
- 201:: (2-1)-th layer
- 202:: (2-2)-th layer
- 203:: Insulating layer
- 210:: Outer body portion
- 220:: Outer circumference portion
- 221:: Second through hole
- 230:: Bonding portion
- 300:: Electrode lead

## Claims

1. A pouch cell comprising:
an electrode assembly;
an inner pouch film covering a portion of the electrode assembly; and
an outer pouch film surrounding an outer circumference of the inner pouch film and coupled to the inner pouch film so as to cover an outer surface of the electrode assembly along with the inner pouch film.

2. The pouch cell of claim 1, wherein the inner pouch film comprises a (1-1)-th layer, and a (1-2)-th layer disposed on an opposite side of the electrode assembly with respect to the (1-1)-th layer, and
the outer pouch film comprises a (2-1)-th layer opposing the electrode assembly and bonded to the (1-2)-th layer such that the inner pouch film and the outer pouch film are coupled.

3. The pouch cell of claim 1, wherein the inner pouch film comprises:
an inner body portion; and
an inner circumference portion connected to the inner body portion at a predetermined angle and extending toward the outer pouch film, and
the outer pouch film comprises:
an outer body portion; and
an outer circumference portion connected to the outer body portion at a predetermined angle and extending toward the inner pouch film, and
an outer circumference of the inner circumference portion and an inner circumference of the outer circumference portion are in contact and coupled.

4. The pouch cell of claim 3, further comprising an electrode lead electrically connecting the electrode assembly to the outside,
wherein a first through hole is formed in the inner circumference portion,
a second through hole is formed in the outer circumference portion, at a position corresponding to the position of the first through hole, and
the electrode lead is electrically connected to the outside through the first through hole and the second through hole.

5. The pouch cell of claim 3, wherein the inner circumference portion extends such that one end is in contact with the outer body portion.

6. The pouch cell of claim 5, wherein the outer circumference portion extends by a length equal to the length that the inner circumference portion extends.

7. The pouch cell of claim 1, wherein the outer pouch film comprises:
an outer body portion;
an outer circumference portion connected to the outer body portion at a predetermined angle and extending toward the inner pouch film, and
a bonding portion connected to the outer circumference portion at a predetermined angle and extending in a direction away from the outer circumference portion, and
an outer circumference of the inner pouch film and an inner circumference of the bonding portion are in contact and coupled.

8. The pouch cell of claim 7, wherein the inner pouch film comprises:
an inner body portion; and
an inner circumference portion connected to the inner body portion at a predetermined angle and extending toward the outer pouch film,
an outer circumference of the inner body portion and an inner circumference of the bonding portion are in contact and coupled, and
an outer circumference of the inner circumference portion and an inner circumference of the outer circumference portion are in contact and coupled.

9. The pouch cell of claim 2, wherein at least one of the (1-2)-th layer and the (2-1)-th layer comprises a polyolefin-based resin.

10. The pouch cell of claim 9, wherein the polyolefin-based resin is polypropylene (PP) or polyethylene (PE).

11. The pouch cell of claim 2, wherein the outer pouch film comprises a (2-2)-th layer disposed on an opposite side of the electrode assembly with respect to the (2-1)-th layer, and
at least one of the (1-1)-th layer and the (2-2)-th layer comprises aluminum (Al) or stainless steel (SUS).

12. The pouch cell of claim 11, wherein the outer pouch film comprises an insulating material, and further comprises an insulating layer disposed on an opposite side of the electrode assembly with respect to the (2-2)-th layer.

13. The pouch cell of claim 2, wherein the inner pouch film comprises a corrosion-resistant material, and further comprises a corrosion resistance layer disposed between the (1-1)-th layer and the electrode assembly.

14. The pouch cell of claim 13, wherein the (1-1)-th layer comprises metal, and
the (1-2)-th layer comprises a polyolefin-based resin.

15. The pouch cell of claim 1, wherein the inner pouch film and the outer pouch film have a box shape with one side open, and
an outer surface of the circumference portion formed along an edge of one side of the inner pouch film is coupled to an inner surface of the circumference portion formed along an edge of one side of the outer pouch film.
